(19) Europäisches Patentamt
European Patent Office
Office européen des brevets

(11) Publication number : **0 318 161 B1**

(12) **EUROPEAN PATENT SPECIFICATION**

(45) Date of publication of patent specification : **14.12.94 Bulletin 94/50**

(51) Int. Cl.$^5$ : **H01M 6/18**

(21) Application number : **88310179.2**

(22) Date of filing : **28.10.88**

# (54) Methods of making interpenetrating polymeric networks, anode and cathode half elements and their use in forming electrochemical cells.

Divisional application 94104165.9 filed on 28/10/88.
The file contains technical information submitted after the application was filed and not included in this specification

(30) Priority : **30.10.87 US 115492**
**25.03.88 US 173385**

(43) Date of publication of application : **31.05.89 Bulletin 89/22**

(45) Publication of the grant of the patent : **14.12.94 Bulletin 94/50**

(84) Designated Contracting States : **BE DE FR GB IT NL SE**

(56) References cited :
**EP-A- 0 174 894**
**EP-A- 0 260 847**
**EP-A- 0 298 802**
**WO-A-82/00147**
**WO-A-87/06395**
**DE-A- 2 737 994**
**DE-A- 3 033 562**
**DE-A- 3 236 027**

(56) References cited :
**DERWENT, AN = 88-152307[22], Derwent Publications Ltd, London, GB; & JP-A-63 094 563 (UBE INDUSTRIES K.K.)**
**SOLID STATE IONICS, vol. 14, 1984, pages 221-224, Elsevier Science Publishers B.V., Amsterdam, NL; D.W. XIA et al.: "Conductivities of solid polymer electrolyte complexes of alkali salts with polymers of methoxypolyethyleneglycol methacrylates"**

(73) Proprietor : **MHB JOINT VENTURE**
**3020 Newmark Drive**
**Miamisburg Ohio 45342 (US)**

(72) Inventor : **Lee, Mei-Tsu**
**c/o Mead Hope Venture**
**3020 Newmark Drive**
**Miamisburg Ohio 45342 (US)**
Inventor : **Shackle, Dale**
**c/o Mead Hope Venture**
**3020 Newmark Drive**
**Miamisburg Ohio 45342 (US)**
Inventor : **Schwab, Gerhart**
**c/o Mead Hope Venture**
**3020 Newmark Drive**
**Miamisburg Ohio 45342 (US)**

(74) Representative : **Deans, Michael John Percy et al**
**Lloyd Wise, Tregear & CO.**
**Norman House**
**105-109 Strand**
**London WC2R OAE (GB)**

EP 0 318 161 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to method of the manufacture of interpenetrating polymeric networks, anode half elements, cathode half elements and of electrochemical cells utilising same.

Solid state electrochemical devices are the subject of intense investigation and development. They are described extensively in the patent literature. See, for example, U.S. Patent 4,303,748 to Armand; 4,589,197 to North; 4,547,440 to Hooper et al. and 4,228,226 to Christiansen. These cells are typically constructed of an alkali metal foil anode, an ionically conducting polymeric electrolyte containing an ionizable alkali metal salt, and a finely divided transition metal oxide as a cathode.

Bauer et al., U.S. Patent 4,654,279, describes a cell in which the electrolyte is a two phase interpenetrating network of a mechanically supporting phase of a continuous network of a crosslinked polymer and an interpenetrating conducting liquid polymer phase comprising an alkali metal salt of a complexing liquid polymer which provides continuous paths of high conductivity throughout the matrix. In one embodiment, a liquid complex of a lithium salt and polyethylene oxide is supported by an epoxy, a polymethacrylate, or a polyacrylonitrile matrix.

The network is formed by preparing a solution of the metal salt, the salt-complexing liquid polymer, and the monomer for the crosslinked supporting phase in a polar solvent. The solvent is evaporated to form a dry layer of a mixture of the remaining materials. The dry layer is then cured.

Le Mehaute et al., U.S. Patent 4,556,614, discloses a solid electrolyte for an electrochemical cell in which a salt complexing polymer is mixed with a miscible and crosslinkable second polymer. The function of the second polymer is to maintain the complexing polymer in a more highly conductive amorphous state. The is accomplished by forming a solution of the two polymers and an ionizable salt in a solvent, evaporating the solvent, and crosslinking the second polymer. The second polymer is crosslinked by radiation.

Andre et al., U.S. Patent 4,357,601, generally relates to crosslinked polymeric electrolytes containing heteroatoms. The compositions described in the patent are chemically crosslinked, for example, through the reaction of a polyol and a polyisocyanate.

Xia et al., "Conductivities of Solid Polymer Electrolyte Complexes of Alkali Salts with Polymers of Methoxypolyethyleneglycol Methacrylates," Solid State Ionics, 14, (1984) 221-24 discloses solid polymeric electrolytes of ionizable salts and polymers prepared by polymerizing oligo-oxyethyl methacrylates. Reference is made at the end of the paper to experiments with radiation cross-linking. The polymers ranged from 150,000 to 300,000 in molecular weight.

The present invention has arisen from our work in seeking to provide a method for forming a polymeric electrolyte for use in solid state electrochemical cells and, more particularly, to provide a method for manufacturing the anode and/or cathode half elements of such cells or the cells themselves; and to provide electrolytes, anode and cathode half elements and electrochemical cells formed by such a method.

In accordance with one aspect of the present invention the electrolyte is formed by preparing a mixture of a liquid monomeric or prepolymeric radiation polymerizable compound, a radiation inert ionically conducting liquid, and an ionizable alkali metal salt, and curing the mixture by exposing it to actinic radiation. In accordance with preferred embodiments, the mixture is cured by exposure to ultraviolet or electron beam radiation. Where ultraviolet radiation is used, the mixture will additionally include an ultraviolet initiator.

The radiation polymerizable electrolyte composition may be coated upon a support or placed in a mould prior to exposure. Exposure of the mixture produces a polymerized or crosslinked (where trifunctional monomers are used) matrix which is interpenetrated by the radiation inert ionically conducting liquid phase. In the most typical embodiments, the radiation polymerizable compounds are preferably low molecular weight polyethylenically unsaturated compounds and still more preferably compounds having at least one heteroatom in the molecule which is capable of forming donor acceptor bonds with an alkali metal cation and having at least two terminal polymerizable ethylenically unsaturated moieties. When polymerized, these compounds form an ionically conductive matrix. The radiation inert liquid is preferably a polar aprotic solvent or a solvent having heteroatoms capable of forming donor acceptor bonds with alkali metal cations such as polyethylene glycol dimethyl ether.

Our methods can be used to manufacture anode and cathode half elements as well as electrochemical cells. Anode half elements are prepared by coating the radiation polymerizable electrolyte composition described above on an appropriate anodic material such as lithium metal on nickel or copper foil; and conveying the coated foil member past a radiation source. After exposure, the foil emerges with the ion conductive network adhered to its surface. This not only provides intimate contact between the foil and the electrolyte but it also protects the underlying foil surface from damage during subsequent manufacturing operations in which it is assembled with the cathode element.

A cathode half element may be provided by first forming a mixture of an active cathode material, an electronic conductor, a liquid monomeric or prepolymeric radiation polymerizable polyethylenically unsaturated compound, a radiation inert ionically conducting liquid, and optionally an ionizable alkali metal salt is prepared. This mixture is coated on a foil member which functions as a current collector, and exposed to actinic radiation to polymerize the polyethlenically unsaturated compound. In some cases the ionizable alkali metal salt may be omitted from the radiation polymerizable cathode composition to facilitate coating. An excess of an ionically conductive salt may be incorporated in the electrolyte layer which subsequently diffuses into the cathode layer when the cell is assembled.

The present invention is also useful in manufacturing a completed electrochemical cell. In accordance with one method, anode and cathode half elements prepared by any process may be assembled with a layer of a radiation polymerizable electrolyte composition in accordance with the present invention therebetween, and the assembly may be exposed to radiation to cure the electrolyte layer and thereby adhere the anode and cathode half elements together.

Other methods may also be used. For example, cured anode and cathode half elements prepared in accordance with the teaching of the present invention may be assembled using heat and pressure in a conventional manner. Alternatively, a cured anode or cathode half element prepared by any process may be assembled with an uncured anode or cathode half element provided in accordance with the teachings of the present invention and the assembly may be exposed to radiation to adhere the two elements together. In another related method, uncured anode and cathode half elements carrying radiation polymerizable compositions may be assembled and the assembly may be exposed to radiation to cure the elements and at the same time secure the cell together. It will also be apparent that a foil member may be coated with a radiation polymerizable electrolyte and cathode compositions assembled with the foil member forming the anode or the current collector for the cathode, and this assembly may be cured.

Accordingly, one manifestation of the present invention is a method for forming an interpenetrating polymeric network containing a liquid electrolyte for use in solid state electrochemical cells which comprises forming a mixture of a liquid, monomeric radiation polymerizable compound or a liquid prepolymeric radiation polymerizable compound, which is terminated at both ends by an ethylenically unsaturated moiety or a glycidyl moiety, an aprotic polar radiation inert ionically conducting liquid, and an ionizable ammonium or alkali metal salt; subjecting said mixture to actinic radiation to thereby crosslink said radiation polymerizable compound and thereby form a solid matrix containing said ionically conducting liquid.

An alternative manifestation of the present invention is a method for forming an anode half element which comprises coating an anodic metal foil member with a mixture which includes a liquid, monomeric radiation polymerizable material or a liquid prepolymeric radiation polymerizable compound which is terminated at both ends by an ethylenically unsaturated moiety or a glycidyl moiety, an aprotic polar radiation inert ionically conducting liquid, and an ionizable ammonium or alkali metal salt; and subjecting said mixture to actinic radiation to thereby crosslink said radiation polymerizable compound and form a solid matrix containing said ionically conducting liquid.

The present invention also provides in a further alternative aspect thereof a method for forming a cathode half element which comprises forming a mixture of an active cathode material, an electronic conductor, a liquid monomeric radiation polymerizable compound or a liquid prepolymeric radiation polymerizable compound which is terminated at both ends by an ethylenically unsaturated moiety or a glycidyl moiety, an aprotic polar radiation inert ionically conducting liquid, and optionally, an ionizable ammonium or alkali metal salt; coating said mixture on a metal foil member; and exposing said mixture to radiation to crosslink said radiation polymerizable compound and thereby form a polymeric network interpenetrated by said ionically conducting liquid.

A method in accordance with another alternative aspect of the present invention is a method for forming an electrochemical cell which comprises assembling an anode and a cathode half element having a radiation polymerizable electrolyte composition therebetween including a liquid monomeric radiation polymerizable compound or a liquid prepolymeric radiation polymerizable compound which is terminated at both ends by an ethytenically unsaturated moiety or a glycidyl moiety, an aprotic polar radiation inert ionically conducting liquid, and an ionizable alkali metal salt; and exposing the assembly to radiation to polymerize the radiation polymerizable compound and thereby secure the anode and cathode half elements together via a polymeric network interpenetrated by said ionically conducting liquid.

Still another alternative method in accordance with the present invention comprises coating an anodic metal foil member with a radiation polymerizable electrolyte composition including a liquid monomeric or prepolymeric radiation polymerizable compound, an aprotic polar radiation inert ionically conducting liquid, and an ionizable alkali metal salt; overcoating said radiation polymerizable electrolyte composition with a radiation polymerizable cathode composition including an active cathode material, an electronic conductor, a liquid monomeric or prepolymeric radiation polymerizable polyethenically unsaturated compound, a radiation inert ionically conducting liquid, and optionally an ionizable alkali metal salt; overlaying said radiation polyerizable cathode

composition with a foil member functioning as a current collector for said cathode, and exposing the laminate so obtained to radiation to polymerize the radiation polymerizable compound and thereby form an electrochemical cell. This process may be reversed in accordance with which the current collector for the cathode may be coated with a radiation polymerizable cathode composition which is overcoated with the radiation polymerizable electrolyte composition described above. This material is assembled with an anodic metal foil member and exposed to radiation.

The network which is interpenetrated by the ionically conducting liquid may be a conductive matrix in which case it is formed from monomers containing heteroatoms capable of forming donor acceptor bonds with an alkali metal cation; or a non-conductive supportive matrix in which case the aforesaid heteroatoms are not present. The preferred monomers or prepolymers are described below.

Polyethylenically unsaturated monomeric or prepolymonomeric materials useful in the practice of the present invention are preferably compounds having at least one, and more preferably a plurality, of heteroatoms (particularly oxygen and/or nitrogen atoms) capable of forming donor acceptor bonds with an alkali metal cation and are terminated by radiation polymerizable moieties. These compounds yield a conductive supportive matrix. More specifically they are preferably low molecular weight oligomers of the formulae (I)-(III) below

$$A \left( CH_2-\underset{\displaystyle R}{\underset{|}{C}}H-O \right)_n A \qquad (I)$$

$$A \left( CH_2-CH_2-\underset{\displaystyle R}{\underset{|}{N}} \right)_n A \qquad (II)$$

$$A \left( CH_2-\underset{\displaystyle R}{\underset{|}{N}}-CH_2 \right)_n A \qquad (III)$$

where n is about 3 to 50 and R is hydrogen or a C1-C3 alkyl group, which are terminated by ethylenically unsaturated moieties or glycidyl moieties represented by A.

A particularly useful group of radiation polymerizable compounds is obtained by reacting a polyethylene glycol with acrylic or methacrylic acid. Also useful in the practice of the present invention are radiation curable materials such as acrylated epoxies, e.g., Bisphenol A epoxy diacrylate, polyester acrylates, copolymers of glycidyl ethers and acrylates or a vinyl compound such as N-vinylpyrrolidone. The latter provides a non-conductive matrix. In selecting these monomers, monomers are selected which do not adversely react with the anodic metal which tends to be highly reactive. For example, halogenated monomers such as vinyl chloride are preferably avoided. Monomers which react with the anodic metal, but which react with it very slowly may be used, but are not desirable.

Preferably, the radiation polymerizable polyethylenically unsaturated compounds have a molecular weight of about 200 to 2,000 and more preferably 200 to 800. Still more preferably they are liquids at temperatures less than 30°C. Examples of radiation curable materials include polyethylene glycol-300 diacrylate (average PEO molecular weight about 300), polyethylene glycol-480 diacrylate (average PEO molecular weight about 480) and the corresponding methacrylates.

It may be desirable to include a radiation curable comonomer in the composition to reduce the glass transition temperature and improve conductivity of the polymer. Any suitable monoacrylate such as tetrahydrofurfuryl acrylate, tetrahydrofurfuryl methacrylate, methoxypolyethylene glycol monomethacrylate, 2-ethoxyethyl acrylate, 2-methoxyethyl acrylate or cyclohexyl methacrylate may be used for this purpose. Triacrylates such as TMPTA, trimethylolpropane ethoxylated triacrylate (TMPEOTA) or trimethylolpropane propoxy triacrylate may be used to introduce crosslinking of the polymer. There should be sufficient rigidity in the layers maintaining separation of the anode and cathode that the cell does not discharge with handling. Monoacrylates may be used in an amount of about 5 to 50% by weight based on the total amount of radiation polymerizable material. The triacrylates are used in amounts of about 2 to 30% by weight on the same basis.

The supportive matrix may be formed in whole or in part from the radiation curable compound. As illustrated in Examples 12 and 13 amounts of higher molecular weight PEO may be added to the composition.

The radiation inert liquids which form the ionically conductive liquid interpenetrating phase can be any low volatile aprotic polar solvent. Preferably, these materials are characterized by a boiling point greater than about 80°C. Representative examples are propylene carbonate, γ-butyrolactone, 1,3-dioxolane, and 2-methyl-tetrahydrofuran. Less polar solvents having heteroatoms capable of bonding alkali metal cations are also useful.

Low volatility simplifies manufacture and improves shelf life. Polyethylene glycol dimethyl ether (PEGDME) is a preferred example. Glymes such as tetraglyme, hexaglyme, and heptaglyme are also desirable solvents.

The radiation curable mixture suitably contains at least 45% by weight of the radiation inert liquid and about 20 to 55% by weight and preferably 25 to 40% by weight of the radiation polymerizable compound. The exact amount of the radiation polymerizable compound and the radiation inert liquid should be adjusted to provide the optimum combination of strength and conductivity for the particular application. As a general rule, if the mixture contains less than about 20% of the polymerizable compound, the electrolyte may be too weak to maintain electrode separation. If the mixture contains greater than about 55% polymerizable material, the electrolyte may exhibit poor conductivity. In those cases in which the electrolyte composition itself or an electrode composition containing the electrolyte is coated on a supporting member, such as a current collector or an electrode half element, the electrolyte often is not required to have the structural integrity of a free standing film. In those applications it is permissible and advantageous to use a higher quantity of the radiation inert liquid because greater conductivity can be achieved, for example it is advantageous to use about 70 to 80% of the radiation inert liquid.

Ionizable alkaline metal salts useful in the practice of this invention include those salts conventionally used in solid state electrochemical cells. Representative examples are sodium, lithium, and ammonium salts of less mobile anions of weak bases having a large anionic radius. Examples may be selected from $I^-$, $Br^-$, $SCN^-$, $C1O_4^-$, $BF_4^-$, $PF_6^-$, $AsF_6^-$, $CF_3COO^-$, $CF_3SO_3^-$ , etc. Specific examples are $LiC1O_4$, $NaC1O_4$, $LiF_3CSO_3$, and $LiBF_4$.

The salt may be used up to an amount which does not exceed its solubility limit in the electrolyte. The amount will therefore vary with the nature of the radiation polymerizable material and the radiation inert liquid solvent. As a general rule, the maximum amount of salt within its solubility limit should be used to maximize the ionic conductivity of the electrolyte. In most applications about 10 to 60 parts salt is used per 100 parts of radiation inert liquid phase.

Our methods can be used to produce free standing films or electrode half elements. To produce a free standing film, the radiation curable mixture may be poured into a mould or coated onto a surface having a release characteristic such as PTFE and cured by exposure to actinic radiation. The electrolyte film thickness can vary but films about 15 to 100 μm and preferably 20 to 50 microns thick are useful in many applications. The obtained film can be assembled with cathode and anode half elements prepared by the processes disclosed herein or prepared by other processes and laminated under heat and pressure. A conductive adhesive my be used if necessary.

Anode half elements are obtained by coating a foil of the anode metal with the radiation curable composition and exposing to radiation. A typical foil is lithium foil or lithium coated foil such as nickel or copper foil having a layer of lithium deposited on its surface. Lithium is preferred because it is very electropositive and light in weight. The radiation curable composition may be coated in any manner. Suitable techniques are rod coating, roll coating, blade coating, etc.

Coating compositions for cathode half elements include particles of the insertion compound and an electrically conductive material. A cathode half element is obtained by coating a foil member such as nickel foil with the aforesaid composition in a thickness of about 10 to 100 μm and preferably about 30 to 60 microns, and curing. The cathode composition may be coated by any of the techniques discussed previously, but it is particularly desirable to design an extrudable cathode composition. The radiation curable composition used functions as a dispersing medium for the cathode materials. A typical coating formulation for a cathode half element may contain about 50 to 80 parts of the insertion compound, about 2 to 15 parts of a conductive particle such as carbon black and about 15 to 50 parts of the radiation curable composition described above. As previously indicated the ionizable salt can be omitted from the cathode composition if it is able to diffuse into the cathodes after assembly with the electrolyte. It may enhance the extrudability of the cathode composition to omit the salt and rely upon its diffusion within the electrochemical cell to fill the cathode. Also, for extrudability, it may be desirable to use a higher amount of ionically conductive liquid in the cathode composition and less in the electrolyte composition and to rely upon diffusion to balance the concentration when the cell is formed.

Insertion compounds and electronically conductive materials useful in the practice of the present invention are well known in the art. Representative examples of insertion compounds are $V_60_{13}$, $MoO_2$, $MnO_2$ and $TiS_2$. Other examples can be found in the aforementioned references. A conductive material is carbon black. Certain conductive polymers (which are characterized by a conjugated network of double bonds) like polypyrol and polyacetylene may also be used for this purpose.

In a further embodiment, the composite cathodic particles described in U.S. Patent 4,576,883 to Hope can be dispersed in the curable composition and coated on a metal foil member as described above.

In preparing the coating compositions for the cathode half element, a small amount of a volatile solvent and a dispersing agent such as lecithin can be added to disperse the cathodic material in the composition and

produce a composition having good coating characteristics.

The term "actinic radiation" as used herein includes the entire electromagnetic spectrum and electron beam and gamma radiation. It is anticipated, however, based on availability of radiation sources and simplicity of equipment that electron beam and ultraviolet radiation will be used most often. Electron beam and gamma radiation are advantageous because they do not require the presence of a photoinitiator. When a photoinitiator is required, for example when using ultraviolet radiation, initiators selected from among conventional photoinititors may be used. When using electron beam, the beam potential must be sufficiently high to penetrate the electrode layer, the anode or cathode half element, or the cell itself depending upon which manufacturing technique is adopted. Voltages of 175 to 300 KV are generally useful. The beam dosage and the speed with which the element traverses the beam are adjusted to control the degree of crosslinking in an otherwise known manner.

It will be apparent from the foregoing description that our methods can also be used to manufacture a complete electrochemical cell. Cured anode and cathode half elements prepared as above can be laminated together under heat and pressure in an otherwise known manner. Alternatively, however, the electrochemical device can be assembled "wet" and then cured in situ. For example, a lithium coated foil member can be coated with the radiation polymerizable electrolyte composition and overcoated with the cathode coating composition described previously; or a nickel foil member can be coated with the cathode coating composition described previously and overcoated with the radiation polymerizable electrolyte composition. These structures can be cured by exposure to electron beam or another source of actinic radiation and the current collector or anodic member can be assembled with it. In another embodiment the foil members associated with both the anode and the cathode half elements may be assembled to form the completed cell and this structure may be cured by electron beam as shown in Example 11.

Thus, in one method a current collector such as a nickel foil member may be coated with a radiation polymerizable cathode composition.

This structure is overcoated with a layer of the radiation polymerizable electrolyte composition described above and assembled with an anodic member such as a lithium foil member or a lithium coated nickel or aluminium member. This assembly may be cured by exposure to electron beam to provide an electrochemical cell. The cured electrolyte and cathode compositions adhere to one another as well as to the metal foil members associated with the anode and cathode.

The process described above can also be reversed. An anodic metal foil member such as lithium coated metal foil can be coated with the radiation polymerizable electrolyte composition described above. The radiation polymerizable cathode composition is coated over the electrolyte composition and a nickel foil member or other current collector is applied to the cathode layer. The assembly is subjected to electron beam radiation to produce an electrochemical cell.

In another process, the anodic foil member or the current collector may be coated with the appropriate cathode or electrolyte composition and that composition may be cured (e.g., by exposure to radiation when it is radiation curable). The cured composition may be overcoated with the other of the electrolyte or cathode composition thereafter, and the overcoating may be cured or the remaining anodic foil member or current collector may be laminated and then the overcoating cured.

Other methods for manufacturing anodes, cathodes, or electrochemical cells will also be evident which utilize the radiation polymerizable electrolyte composition. We have found that this composition is effective in bonding the anode and cathode elements together and, at the same time, provides a polymeric matrix interpenetrated by an ionically conductive liquid.

The invention is illustrated in more detail by way of the following non-limiting examples.

## Example 1

1g of poly(ethylene glycol) diacrylate, M.W. 300, 1g of poly(ethylene glycol) dimethyl ether, M.W. 400, and 0.3g of lithium trifluoromethane sulfonate were mixed together. Benzophenone, 0.1g was then added and the mixture, as a thin layer, poured into an aluminium weighing dish. This mixture was irradiated in an Argon atmosphere for 1 minute with GE F40/BLB blacklight, (output range from 300-420nm and output maximum slightly above 350nm). The exposure transformed the liquid mixture into a flexible, opaque film with a dry feel. Its ionic conductivity is $2.8 \times 10^{-5}$ $ohm^{-1}$ $cm^{-1}$.

## Example 2

0.5g of poly(ethylene glycol) diacrylate, 0.5g of poly(ethylene glycol) diqlycidyl ether, 1g of poly(ethylene glycol) dimethyl ether and 0.6g of lithium trifluoromethane sulfonate were mixed together, 0.1g of benzophenone was then added and then the mixture irradiated in an aluminium weighing dish, using the same U.V. lamp as in Example 1. The flexible, opaque film had an ionic conductivity of 2.7 x $10^{-5}$ $ohm^{-1}$ $cm^{-1}$.

Example 3

2g of poly(ethylene glycol)diacrylate, avg. M.W. 300, 2g of poly(ethylene glycol)dimethyl ether, avg. M.W. 400, and 0.6g of lithium trifluoromethane sulfonate were mixed together. This mixture was then coated on aluminium foil and irradiated by electron beam with 3 Megarads at 20 ft/min.(10.16cm/s). (Energy Science Inc.). This resulted in a clear and flexible dry film.

Example 4

2g of UVITHANE ZL-1178®. 2g of poly(ethylene glycol) dimethylether and 0.6g of lithium trifluoromethane sulfonate were mixed together. UVITHANE ZL-1178® is a diacrylate functionalized polyurethane with ether portions built up from poly(propylene glycol) from Morton Thiokol Chemical Co. This mixture was then coated on aluminium foil and irradiated by electron beam with 3, 6, 9 and 12 MR (Megarads) at 20 ft/min.(fpm) (10.16cm/s). This resulted in clear and flexible dry films.

Example 5

Onto a sheet of industrial strength aluminium foil was coated with a drawdown bar a film of the following mixture:

| | |
|---|---|
| Poly(ethylene glycol)diacrylate (avg. M.W. of PEO 300) | 2.0g |
| Poly(ethylene glycol) dimethyl ether (avg. M.W. of PEO 400) | 2.0g |
| Lithium trifluoromethane sulfonate | 0.6g |

The coated foil was passed through the path of an electron beam emitting source at a speed of 20 fpm(10.16cm/s). Doses of 3, 6, 9, and 12 MR were used. In all four cases a polymer film cured onto the aluminium foil was obtained. The resulting ionic conductivities on the order of $10^{-5}$ (ohm $cm^{-1}$).

Example 6

Onto a sheet of industrial strength aluminium foil was coated with a drawdown bar a film of the following mixture:

| | |
|---|---|
| Poly(ethylene glycol)diacrylate (avg. M.W. of PEO 300) | 2.0g |
| Poly(ethylene glycol) dimethyl ether (avg. M.W. of PEO 400) | 1.0g |
| Lithium trifluoromethane sulfonate | 0.1g |
| Unitized $V_6O_{13}$ particles [70% $V_6O_{13}$, 20% PEO (M.W. 400,000) 10% Shawinigan carbon prepared as described in U.S. Patent 4,576,883] | 1.0g |

The coated aluminum foil was passed through the path of an electron beam emitting source at a speed of 20 fpm (10.16cm/s) and dosage of 12 MR. A black flexible polymer film on aluminium was the result.

Example 7

Onto a sheet of industrial strength aluminium foil was coated with a drawdown bar a film of the following mixture:

| | |
|---|---|
| Poly(ethylene glycol)diacrylate (avg. M.W. of PEO 300) | 2.5g |
| Poly(ethylene glycol) dimethyl ether (avg. M.W. of PEO 400) | 2.8g |
| Uvithane ZL-1178® | 2.8g |
| Lithium trifluoromethane sulfonate | 0.84g |
| Unitized $V_6O_{13}$ | 3.0g |

The coated foil was passed through the path of an electron beam source at a speed of 20 fpm (10.16cm/s ) and a dose of 12 MR. This resulted in curing the liquid film into a flexible black polymer on aluminium foil.

Example 8

Onto a sheet of industrial strength aluminium foil was coated with a drawdown bar a film of the following mixture which had been ground in a ball mill to the desired particle size:

| | |
|---|---|
| $V_6O_{13}$ | 35 g |
| Lecithin | 0.75g |
| Methylethyl ketone (MEK) | 33g |
| Heptaglyme | 15g |
| Carbon black | 3.5g |
| Polyethylene Glycol Diacrylate | 15.g |

The solvent (MEK) was allowed to evaporate. The resulting film was then passed through the path of an electron beam source at a speed of 50 fpm (25.4cm/s) and a dose of 12 Megarads. This gave a cured flexible black film useful as a cathode half element.

Example 9

A film was prepared as in Example 8 without curing. A mixture of pre-polymer electrolyte as in Example 5 was then coated on top of it. This sample was then passed through the path of an electron beam source at a speed of 50 fpm (25.4cm/s) and a dose of 12 MR. This gave a cured, glossy black film which could be assembled with another foil member for use as an electrochemical device.

Example 10

A coating was prepared and cured as in Example 8. A mixture of pre-polymer electrolyte as in Example 5 was then coated on top of it. This sample was then passed through electron beam source at a speed of 50 fpm (25.4cm/s) and a dose of 3 MR. This gave a cured black film which could be assembled with another foil member for use as an electrochemical device.

Example 11

The coatings were prepared as described in Example 9. The coatings were then covered with nickel foil. This construction was then cured by passage through an electron beam operating at 175 KV, a dosage of 6 MR and a speed of 20 fpm (10.16cm/s) to provide an electrochemical device. Nickel foil was selected merely to demostrate that the electrode and electroylyte compositions could be cured by electron beam through the foil. To prepare an electrochemical cell, the cathode composition of Example 8 would be coated on a lithium foil member or a lithium coated member in a dry room.

Example 12

The radiation curable extrudable polymer electrolyte compositions containing polyethylene oxide (PEO), polyethylene glycol diacrylate, (PEG-DA), trimethylolpropane ethoxylated triacrylate (TMPEOTA), $LiCF_3SO_3$ and a suitable ionic conductive solvent such as tetraglyme or propylene carbonate were made and extruded on aluminium foil using a Brabender extruder at 125°C as shown in the Table below. The extrusion mixture was prepared as follows: First, the salt was dissolved in half of the propylene carbonate. The PEO is dispersed in the other half of the propylene carbonate, then PEG-DA and TMPEOTA are added to the mixture. The salt and the PEO compositions are mixed and the mixture is poured into the input of the extruder.

TABLE

| Compound | Sample No. (wt.%) | | | |
|---|---|---|---|---|
| | 1 | 2 | 3 | 4 |
| PEG-DA (400) | -- | -- | 0.04 | 0.10 |
| TMPEOTA | 0.03 | 0.13 | 0.01 | 0.01 |
| Tetraglyme | 0.70 | 0.60 | 0.75 | 0.65 |
| PEO | 0.20 | 0.20 | 0.05 | 0.10 |
| $LiCF_3SO_3$ | 0.07 | 0.07 | 0.15 | 0.14 |

Samples 1-4 were then passed through the electron beam at 7.8 MR to give flexible, opaque films about 1 to 5 mils thick having a conductivity of $7x10^{-5}$ $ohm^{-1}$ $cm^{-1}$.

Example 13

The following mixtures containing propylene carbonate (PC) were also made:

| Compound | Sample No. (wt. %) | |
|---|---|---|
| | PC-1 | PC-2 |
| PEG-DA | 0.10 | 0.10 |
| TMPEOTA | 0.01 | 0.01 |
| PC | 0.65 | 0.65 |
| PEO | 0.10 | 0.05 |
| $LICF_3SO_3$ | 0.14 | 0.19 |

The materials were extruded under the same conditions described in Example 13 and passed through the electron beam to give clear, flexible films having a conductivity of $2x10^{-3}$ $ohm^{-1}cm^{-1}$.

Example 14

Cathode mixtures containing 50% $V_6O_{13}$, 7% Shawinigan Black and 43% of compositions PC-1 and PC-2 from Example 13 were extruded onto nickel or aluminium foil under the same conditions as described above and cured by electron beam at 7.8 MR.

Example 15

Batteries were made as follows:
(1) Extruding the cathode composition of Example 14 on aluminium foil;
(2) Curing the cathode composition by electron beam as in Example 14;
(3) Extruding composition PC-2 from Example 13 on top of the cured cathode composition;
(4) Laminate with lithium foil;
(5) Passing the structure through an electron beam at 7.8 MR. The lithium foil retained its property during this process.

Example 16

Batteries were made as follows:
(1) Extruding the cathode composition of Example 14 on aluminium foil;
(2) Curing the cathode composition by electron beam as in Example 14;
(3) Extruding composition PC-2 from Example 13 on top of the cured cathode composition;
(4) Passing the coating through the electron beam at 7.8 MR;
(5) Laminating lithium foil to the laminate of step (4) by heat and/or pressure roll.

## Claims

1. A method for forming an interpenetrating polymeric network containing a liquid electrolyte for use in solid state electrochemical cells, the method being characterised in comprising the steps of forming a mixture of a liquid, monomeric radiation polymerizable compound or a liquid prepolymeric radiation polymerizable compound which is terminated at both ends by an ethylenically unsaturated moiety or a glycidyl moiety, an aprotic polar radiation inert ionically conducting liquid, and an ionizable ammonium or alkali metal salt, and subjecting said mixture to actinic radiation to thereby crosslink said radiation polymerizable material and form a solid matrix containing said ionically conducting liquid.

2. A method according to Claim 1, further characterised in that said radiation polymerizable compound is a polyethylenically unsaturated compound including at least one heteroatom in the molecule.

3. A method according to Claim 2, further characterised in that said radiation polymerizable compound includes a repeating unit selected from

$-(CH_2CH(R^1)-O)-$, $-(CH_2CH_2N(R^1))-$, or $-(CH_2N(R^1)CH_2)-$

where $R^1$ is hydrogen or a lower alkyl group.

4. A method according to Claim 3, further characterised in that said radiation polymerizable compound is represented by one of the formulae I to III below:

$A-(CH_2-CH(R)-O)_n-A$ (I)

$A-(CH_2-CH_2-N(R))_n-A$ (II)

$A-(CH_2-N(R)-CH_2)_n-A$ (III)

where n is about 3 to 50 and R is hydrogen or a C1 to C3 alkyl group, and A represents an ethylenically

unsaturated moiety or glycidyl moiety.

5. A method according to Claim 2, further characterised in that said radiation polymerizable compound is a polyethylene glycol modified to include terminal ethylenically unsaturated groups.

6. A method according to Claim 5, further characterised in that said radiation polymerizable compound is polyethylene glycol diacrylate, polyethylene glycol dimethacrylate, or polyethylene glycol diglycidyl ether.

7. A method according to Claims 5 or 6, further characterised in that said ionically conducting liquid is polyethylene glycol dimethyl ether.

8. A method according to any preceding claim, wherein said salt is a salt of a cation selected from lithium, sodium, potassium and ammonium cations; and an anion selected from I-, Br-, SCN- $C10_4$-, $CF_3SO_3$-, $BF_4$-, $PF_6$-, $CF_3CC1_3$-, $AsF_6$-, and $CF_3C00$-.

9. A method according to any preceding claim, further characterised in that said actinic radiation is ultraviolet radiation or electron beam radiation.

10. A method according to any preceding claim, further characterised in that said radiation inert liquid is present in said mixture in an amount of at least 45% by weight, and preferably at least 70% by weight.

11. A solid state electrochemical cell including an interpenetrated polymeric network formed by the method of any preceding claim as an electrolyte.

12. A method for forming an anode half element, characterised in comprising the steps of: coating an anodic metal foil with a mixture which includes a liquid, monomeric radiation polymerizable compound or a liquid prepolymeric radiation compound which is terminated at both ends by an ethylenically unsaturated moiety or a glycidyl moiety, an aprotic polar radiation inert ionically conducting liquid, and an ionizable ammonium or alkali metal salt; and forming therefrom an interpenetrating polymeric network according to the method of Claim 1.

13. A method according to Claim 12, further characterised in that said radiation polymerizable material is ionically conductive.

14. A method according to Claim 13, wherein said radiation polymerizable compound is a compound as defined in any of Claims 3 to 6.

15. A method according to any of Claims 12 to 14, further characterised in that said anodic metal foil is a lithium foil or a lithium coated foil.

16. A method according to any of Claims 12 to 15, further characterised in that said mixture contains at least 45% by weight of said radiation inert liquid.

17. A method for forming an electrochemical cell characterised in comprising the steps of: assembling an anode half element and a cathode half element and forming therebetween an interpenetrating polymeric network by the method according to any of Claims 1-10.

18. A method for forming a cathode half element characterised in comprising the steps of: coating a metal foil with a mixture including an active cathode material, an electronic conductor, a liquid monomeric radiation polymerizable compound or a liquid prepolymeric radiation polymerizable compound which is terminated at both ends by an ethylenically unsaturated moiety or a glycidyl moiety, and an aprotic polar radiation inert ionically conducting liquid and an ionizable ammonium or alkali metal salt; and subjecting said mixture to radiation to thereby crosslink said radiation polymerizable compound.

19. A method according to Claim 18 further characterised in that said active cathode material is an intercalation compound, and preferably a vanadium oxide.

20. A method according to any of Claim 18 or 19 further characterised in that said mixture additionally includes an ionizable alkali metal salt.

21. A method according to any of Claims 18 to 20, further characterised in that said radiation polymerizable

compound is a compound as defined in any of Claims 2 to 6.

22. A method for forming an electrochemical cell characterised in comprising the steps of coating an anodic metal foil member with a radiation polymerizable electrolyte composition including a liquid, monomeric or prepolymeric radiation polymerizable polyethylenically unsaturated compound, an aprotic polar radiation inert ionically conducting liquid, and an ionizable alkali metal salt; overcoating said radiation polymerizable electrolyte composition with a radiation polymerizable cathode composition including a liquid monomeric or prepolymeric radiation polymerizable polyethylenically unsaturated compound, an active cathode material, an electronic conductor, and an aprotic polar radiation inert ionically conducting liquid; and both subjecting said electrolyte composition and said cathode composition to radiation, and laminating a metal foil current collector to the surface of said cathode composition.

23. A method according to Claim 22 wherein said metal foil current conductor is applied prior to said radiation step.

24. A method according to Claim 22 wherein said radiation step is carried out prior to the application of said metal foil current conductor.

25. A method for forming an electrochemical cell characterised in comprising the steps of: coating a metal foil member with a radiation polymerizable cathode composition including a liquid radiation polymerizable monomeric or prepolymeric polyethylenically unsaturated compound containing at least one heteroatom, an aprotic polar radiation inert ionically conducting liquid, an active cathode material, and an electronic conductor; and overcoating said radiation polymerizable cathode composition with a radiation polymerizable electrolyte composition including a liquid radiation polymerizable monomeric or prepolymeric polyethylenically unsaturated compound, an aprotic polar radiation inert ionically conducting liquid, and an ionizable alkali metal salt; and both subjecting said cathode composition and said electrolyte composition to radiation, and laminating an anodic metal foil member to the surface of said electrolyte composition.

26. A method according to Claim 25 wherein said anodic metal foil member is laminated to said electrolyte composition prior to said radiation step.

27. A method according to Claim 25 wherein said radiation step is carried out prior to said laminating of an anodic metal foil member.

28. A method for forming an electrochemical cell characterised in comprising the steps of: forming an anode half element according to the method of Claims 12-16 wherein the radiation polymerizable compound is polyethylenically unsaturated; and overcoating said cured electrolyte composition with a radiation polymerizable cathode composition including a liquid monomeric or prepolymeric radiation polymerizable polyethylenically unsaturated compound, an active cathode material, an electronic conductor, and an aprotic polar radiation inert ionically conducting liquid.

29. A method according to Claim 28, further characterised in comprising the additional steps of laminating a metal foil current collector to the surface of said cathode composition, and subjecting said cathode composition to radiation to cure said cathode composition.

30. A method according to Claim 29, further characterised in comprising the additional steps of subjecting said cathode composition to radiation to cure said cathode composition, and laminating a metal foil current collector to the surface of said cured cathode composition.

31. A method for forming an electrochemical cell characterised in comprising the steps of: forming a cathode half element according to the method of any of Claims 18-21 wherein the radiation polymerizable compound is polyethylenically unsaturated; and overcoating said cured cathode composition with a radiation polymerizable electrolyte composition including a liquid radiation polymerizable monomeric or prepolymeric polyethylenically unsaturated compound, an aprotic polar radiation inert ionically conducting liquid, and an ionizable alkali metal salt.

32. A method according to Claim 31, further characterised in comprising the additional steps of applying an anodic metal foil member to the surface of said electrolyte composition, and subjecting said electrolyte composition to radiation to cure said electrolyte composition.

33. A method according to Claim 31, further characterised in comprising the additional steps of subjecting said electrolyte composition to radiation to cure said electrolyte composition, and laminating an anodic foil member to the surface of said cured electrolyte composition.

34. A method for forming an electrochemical cell characterised in comprising the steps of: coating an anodic metal foil member with a radiation polymerizable electrolyte composition including a liquid, monomeric or prepolymeric radiation polymerizable polyethylenically unsaturated compound, an aprotic polar radiation inert ionically conducting liquid, and an ionizable ammonium or alkali metal salt; coating a metal foil member with a radiation polymerizable cathode composition including a liquid radiation polymerizable monomeric or prepolymeric polyethylenically unsaturated compound, an aprotic polar radiation inert ionically conducting liquid, an active cathode material and an electronic conductor; and both laminating said coated metal foil member with said coated anodic member such that said electrolyte composition is in contact with said cathode composition, and subjecting said electrolyte composition and said cathodic composition to radiation to cure said compositions.

35. A method according to Claim 34, wherein said cathode composition is subjected to radiation to cure said composition prior to laminating said coated anodic metal foil member with said cathode composition, and said electrolyte composition is subsequently subjected to radiation to cure said electrolyte composition.

36. A method according to Claim 34, wherein said electrolyte composition is subjected to radiation to cure said electrolyte composition prior to laminating said coated metal foil member with said cured electrolyte composition, and said cathode composition is subsequently subjected to radiation to cure said cathode composition.

37. A method according to Claim 34, wherein firstly said electrolyte composition is subjected to radiation to cure said electrolyte composition, and then said cathode composition is subjected to radiation to cure said cathode composition, prior to laminating said anodic metal foil member coated with said cured electrolyte composition to said metal foil member coated with cured cathode composition.

38. A method according to Claim 34 wherein said coated metal foil member is laminated with said anodic member prior to subjecting said electrolyte composition and said cathodic composition to radiation to cure said compositions.

**Patentansprüche**

1. Ein Verfahren zur Bildung einer durchdringenden polymeren Vernetzung, die einen flüssigen Elektrolyt enthält, für den Einsatz in elektrochemischen Trockenzellen, wobei das Verfahren durch folgende Schritte gekennzeichnet ist: Bereitung einer Mischung aus einer flüssigen monomeren strahlenpolymerisationsfähigen Verbindung oder einer flüssigen vorpolymeren strahlenpolymerisationsfähigen Verbindung, die an beiden Enden mit einer ethylen-ungesättigten Komponente oder einer Glycidylkompenente abschließt, einer aprotischen, polaren, strahleninaktiven ionenleitfähigen Flüssigkeit und einem dissoziablen Ammonium- oder Alkalisalz; Bestrahlung dieser Mischung mit aktinischen Strahlen zum Zwecke der Vernetzung dieser strahlenpolymerisationsfähigen Substanzen und der Bildung einer festen Matrix, die die genannte ionenleitfähige Flüssigkeit enthält.

2. Ein Verfahren gemäß Anspruch 1, das weiterhin dadurch gekennzeichnet ist, daß die besagte strahlenpolymerisationsfähige Verbindung eine polyethylen-ungesättigte Verbindung ist, die mindestens ein Heteroatom im Molekül aufweist.

3. Ein Verfahren gemäß Anspruch 2, das weiterhin dadurch gekennzeichnet ist, daß die besagte strahlenpolymerisationsfähige Verbindung eines der folgenden Strukturelemente enthält:

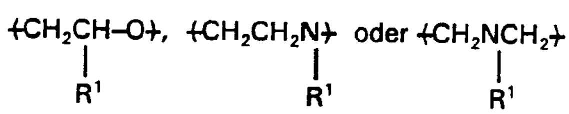

wobei $R^1$ Wasserstoff oder eine niedere Alkylgruppe ist.

4. Ein Verfahren gemäß Anspruch 3, das weiterhin dadurch gekennzeichnet ist, daß die besagte strahlenpolymerisationsfähige Verbindung durch eine der folgenden Formeln I bis III dargestellt ist:

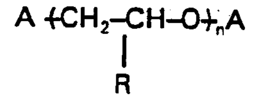

(I)

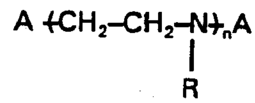

(II)

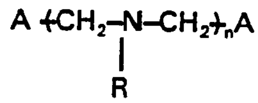

(III)

wobei n etwa 3 bis 50 und R Wasserstoff oder eine C1- bis C3-Alkylgruppe ist und die endständigen Glieder ethylen-ungesättigte Komponenten oder Glycidylkomponenten sind, die durch A dargestellt sind.

5. Ein Verfahren gemäß Anspruch 2, das weiterhin dadurch gekennzeichnet ist, daß die besagte strahlenpolymerisationsfähige Verbindung ein modifiziertes Polyethylenglycol ist, das endständige ethylen-ungesättigte Gruppen enthält.

6. Ein Verfahren gemäß Anspruch 5, das weiterhin dadurch gekennzeichnet ist, daß die besagte strahlenpolymerisationsfähige Verbindung ein Polyethylenglycoldiacrylat, Polyethylenglycoldimethacrylat oder Polyethylenglycoldiglycidylether ist.

7. Ein Verfahren gemäß Anspruch 5 oder 6, das weiterhin dadurch gekennzeichnet ist, daß die besagte strahlenpolymerisationsfähige Verbindung Polyethylenglycoldimethylether ist.

8. Ein Verfahren gemäß jeglichem der vorgenannten Ansprüche, bei dem das besagte Salz aus einem Lithium-, Natrium-, Kalium-oder Ammoniumkation und einem der folgenden Anionen gebildet ist: $I^-$, $Br^-$, $SCN^-$, $ClO_4^-$, $CF_3SO_3^-$, $BF_4^-$, $PF_6^-$, $CF_3CCl_3^-$, $AsF_6^-$ und $CF_3COO^-$.

9. Ein Verfahren gemäß jeglichem der vorgenannten Ansprüche, das weiterhin dadurch gekennzeichnet ist, daß die besagte aktinische Bestrahlung mit UV-Strahlen oder Elektronenstrahlen erfolgt.

10. Ein Verfahren gemäß jeglichem der vorgenannten Ansprüche, das weiterhin dadurch gekennzeichnet ist, daß der Anteil der besagten strahleninaktiven Flüssigkeit in der besagten Mischung mindestens 45 Masse-% und vorzugsweise mindestens 70 Masse-% beträgt.

11. Eine elektrochemische Trockenzelle, die als Elektrolyt eine durchdringende polymere Vernetzung enthält, die nach dem Verfahren jeglichen vorgenannten Anspruches gebildet wurde.

12. Ein Verfahren zur Herstellung eines Anodenhalbelementes, das durch folgende Schritte gekennzeichnet ist: Beschichtung einer Anodenmetallfolie mit einer Mischung aus einer flüssigen monomeren strahlenpolymerisationsfähigen Verbindung oder einer flüssigen vorpolymeren strahlenpolymerisationsfähigen Verbindung, die an beiden Enden mit einer ethylen-ungesättigten Komponente oder einer Glycidylkompenente abschließt, einer aprotischen, polaren, strahleninaktiven ionenleitfähigen Flüssigkeit und einem dissoziablen Ammonium- oder Alkalisalz; Herstellung einer durchdringenden polymeren Vernetzung dieses Aufbaus nach dem Verfahren aus Anspruch 1.

13. Ein Verfahren gemäß Anspruch 12, das weiterhin dadurch gekennzeichnet ist, daß die besagte strahlenpolymerisationsfähige Substanz ionenleitfähig ist.

14. Ein Verfahren gemäß Anspruch 13, bei dem die besagte strahlenpolymerisationsfähige Verbindung eine Verbindung gemäß Definition in einem der Ansprüche 3 bis 6 ist.

**15.** Ein Verfahren gemäß jeglichem der Ansprüche 12 bis 14, das weiterhin dadurch gekennzeichnet ist, daß die besagte Anodenmetallfolie eine Lithiumfolie oder eine mit Lithium beschichtete Folie ist.

**16.** Ein Verfahren gemäß jeglichem der Ansprüche 12 bis 15, das weiterhin dadurch gekennzeichnet ist, daß die besagte Mischung mindestens 45 Masse-% der besagten strahleninaktiven Flüssigkeit enthält.

**17.** Ein Verfahren zur Herstellung einer elektrochemischen Zelle, das durch folgende Schritte gekennzeichnet ist: Zusammenfügung eines Anodenhalbelementes und eines Katodenhalbelementes und Bildung einer dazwischenliegenden durchdringenden polymeren Vernetzung nach dem Verfahren aus jeglichem der Ansprüche 1-10.

**18.** Ein Verfahren zur Herstellung eines Katodenhalbelementes, das durch folgende Schritte gekennzeichnet ist: Beschichtung einer Metallfolie mit einer Mischung aus einer aktiven Katodensubstanz, einem elektronischen Leiter, einer flüssigen monomeren strahlenpolymerisationsfähigen Verbindung oder einer flüssigen vorpolymeren strahlenpolymerisationsfähigen Verbindung, die an beiden Enden mit einer ethylen-ungesättigten Komponente oder einer Glycidylkompenente abschließt, einer aprotischen, polaren, strahleninaktiven ionenleitfähigen Flüssigkeit und einem dissoziablen Ammonium- oder Alkalisalz; Bestrahlung dieser Mischung zum Zwecke der Vernetzung der besagten strahlenpolymerisationsfähigen Verbindung.

**19.** Ein Verfahren gemäß Anspruch 18, das weiterhin dadurch gekennzeichnet ist, daß die besagte aktive Katodensubstanz eine schichtförmig ausgebildete Einlagerungsverbindung, vorzugsweise ein Vanadiumoxid, ist.

**20.** Ein Verfahren gemäß jeglichem der Ansprüche 18 oder 19, das weiterhin dadurch gekennzeichnet ist, daß die besagte Mischung zusätzlich ein dissoziables Alkalisalz enthält.

**21.** Ein Verfahren gemäß jeglichem der Ansprüche 18 bis 20, das weiterhin dadurch gekennzeichnet ist, daß die besagte strahlenpolymerisationsfähige Verbindung eine Verbindung gemäß Definition in einem der Ansprüche 2 bis 6 ist.

**22.** Ein Verfahren zur Herstellung einer elektrochemischen Zelle, das durch folgende Schritte gekennzeichnet ist: Beschichtung eines Anodenmetallfolienteils mit einer strahlenpolymerisationsfähigen Elektrolytmischung, bereitet aus einer flüssigen monomeren oder vorpolymeren strahlenpolymerisationsfähigen polyethylen-ungesättigten Verbindung, einer aprotischen, polaren, strahleninaktiven ionenleitfähigen Flüssigkeit und einem dissoziablen Alkalisalz; Überziehung dieser strahlenpolymerisationsfähigen Elektrolytmischung mit einer strahlenpolymerisationsfähigen Katodenmischung, bereitet aus einer flüssigen monomeren oder vorpolymeren strahlenpolymerisationsfähigen polyethylen-ungesättigten Verbindung, einer aktiven Katodensubstanz, einem elektronischen Leiter und einer aprotischen, polaren, strahleninaktiven ionenleitfähigen Flüssigkeit; Bestrahlung sowohl der besagten Elektrolytmischung als auch der besagten Katodenmischung und Aufpressen eines Metallfolienstromabnehmers auf die Oberfläche der besagten Katodenmischung.

**23.** Ein Verfahren gemäß Anspruch 22, bei dem der besagte Metallfolienstromabnehmer vor dem besagten Bestrahlungsschritt aufgebracht wird.

**24.** Ein Verfahren gemäß Anspruch 22, bei dem der besagte Bestrahlungsschritt vor Aufbringung des besagten Metallfolienstromabnehmers erfolgt.

**25.** Ein Verfahren zur Herstellung einer elektrochemischen Zelle, das durch folgende Schritte gekennzeichnet ist: Beschichtung eines Metallfolienteils mit einer strahlenpolymerisationsfähigen Katodenmischung, bereitet aus einer flüssigen monomeren oder vorpolymeren strahlenpolymerisationsfähigen polyethylen-ungesättigten Verbindung, die mindestens ein Heteroatom aufweist, einer aprotischen, polaren, strahleninaktiven ionenleitfähigen Flüssigkeit, einer aktiven Katodensubstanz und einem elektronischen Leiter; Überziehung dieser strahlenpolymerisationsfähigen Katodenmischung mit einer strahlenpolymerisationsfähigen Elektrolytmischung, bereitet aus einer flüssigen monomeren oder vorpolymeren strahlenpolymerisationsfähigen polyethylen-ungesättigten Verbindung, einer aprotischen, polaren, strahleninaktiven ionenleitfähigen Flüssigkeit und einem dissoziablen Alkalisalz; Bestrahlung sowohl der besagten Katodenmischung als auch der besagten Elektrolytmischung; Aufpressen eines Anodenmetallfolienteils auf die Oberfläche der besagten Elektrolytmischung.

**26.** Ein Verfahren gemäß Anspruch 25, bei dem das besagte Anodenmetallfolienteil vor dem besagten Bestrahlungsschritt auf die besagte Elektrolytmischung aufgepreßt wird.

**27.** Ein Verfahren gemäß Anspruch 25, bei dem der besagte Bestrahlungsschritt vor der besagten Aufpressung des Anodenmetallfolienteils erfolgt.

**28.** Ein Verfahren zur Herstellung einer elektrochemischen Zelle, das durch folgende Schritte gekennzeichnet ist: Herstellung eines Anodenhalbelementes nach dem Verfahren der Ansprüche 12-16, wobei die strahlenpolymerisationsfähige Verbindung polyethylenungesättigt ist; Überziehung der besagten, bereits vernetzten Elektrolytmischung mit einer strahlenpolymerisationsfähigen Katodenmischung, bereitet aus einer flüssigen monomeren oder vorpolymeren strahlenpolymerisationsfähigen polyethylen-ungesättigten Verbindung, einer aktiven Katodensubstanz, einem elektronischen Leiter und einer aprotischen, polaren, strahleninaktiven ionenleitfähigen Flüssigkeit.

**29.** Ein Verfahren gemäß Anspruch 28, das weiterhin durch folgende Zusatzschritte gekennzeichnet ist: Aufpressen eines Metallfolienstromabnehmers auf die Oberfläche der besagten Katodenmischung; Bestrahlung der besagten Katodenmischung zum Zwecke der Vernetzung der besagten Katodenmischung.

**30.** Ein Verfahren gemäß Anspruch 29, das weiterhin durch folgende Zusatzschritte gekennzeichnet ist: Bestrahlung der besagten Katodenmischung zum Zwecke der Vernetzung der besagten Katodenmischung; Aufpressen eines Metallfolienstromabnehmers auf die Oberfläche der besagten, bereits vernetzten Katodenmischung.

**31.** Ein Verfahren zur Herstellung einer elektrochemischen Zelle, das durch folgende Schritte gekennzeichnet ist: Herstellung eines Katodenhalbelementes nach dem Verfahren eines der Ansprüche 18-21, wobei die strahlenpolymerisationsfähige Verbindung polyethylen-ungesättigt ist; Überziehung der besagten, bereits vernetzten Katodenmischung mit einer strahlenpolymerisationsfähigen Elektrolytmischung, bereitet aus einer flüssigen monomeren oder vorpolymeren strahlenpolymerisationsfähigen polyethylen-ungesättigten Verbindung, einer aprotischen, polaren, strahleninaktiven ionenleitfähigen Flüssigkeit und einem dissoziablen Alkalisalz.

**32.** Ein Verfahren gemäß Anspruch 31, das weiterhin durch folgende Zusatzschritte gekennzeichnet ist: Aufbringen eines Anodenmetallfolienteils auf die Oberfläche der besagten Elektrolytmischung; Bestrahlung der besagten Elektrolytmischung zum Zwecke der Vernetzung der besagten Elektrolytmischung.

**33.** Ein Verfahren gemäß Anspruch 31, das weiterhin durch folgende Zusatzschritte gekennzeichnet ist: Bestrahlung der besagten Elektrolytmischung zum Zwecke der Vernetzung der besagten Elektrolytmischung; Aufpressen eines Anodenmetallfolienteils auf die Oberfläche der besagten, bereits vernetzten Elektrolytmischung.

**34.** Ein Verfahren zur Herstellung einer elektrochemischen Zelle, das durch folgende Schritte gekennzeichnet ist: Beschichtung eines Anodenmetallfolienteils mit einer strahlenpolymerisationsfähigen Elektrolytmischung, bereitet aus einer flüssigen monomeren oder vorpolymeren strahlenpolymerisationsfähigen polyethylen-ungesättigten Verbindung, einer aprotischen, polaren, strahleninaktiven ionenleitfähigen Flüssigkeit und einem dissoziablen Ammonium- oder Alkalisalz; Beschichtung eines Metallfolienteils mit einer strahlenpolymerisationsfähigen Katodenmischung, bereitet aus einer flüssigen monomeren oder vorpolymeren strahlenpolymerisationsfähigen polyethylen-ungesättigten Verbindung, einer aprotischen, polaren, strahleninaktiven ionenleitfähigen Flüssigkeit, einer aktiven Katodensubstanz und einem elektronischen Leiter; Zusammenpressen des besagten beschichteten Metallfolienteils mit dem besagten beschichteten Anodenteil in der Weise, daß die besagte Elektrolytmischung an der besagten Katodenmischung anliegt; Bestrahlung der besagten Elektrolytmischung und der besagten Katodenmischung zum Zwecke der Vernetzung der besagten Mischungen.

**35.** Ein Verfahren gemäß Anspruch 34, bei dem die besagte Katodenmischung vor dem Zusammenpressen des besagten beschichteten Anodenmetallfolienteils mit der besagten Katodenmischung zum Zwecke der Vernetzung der besagten Mischung bestrahlt wird und anschließend die besagte Elektrolytmischung zum Zwecke der Vernetzung der besagten Elektrolytmischung bestrahlt wird.

**36.** Ein Verfahren gemäß Anspruch 34, bei dem die besagte Elektrolytmischung zum Zwecke der Vernetzung der besagten Elektrolytmischung bestrahlt wird, bevor das besagte beschichtete Metallfolienteil mit der

besagten, bereits vernetzten Elektrolytmischung zusammengepreßt wird, und anschließend die besagte Katodenmischung zum Zwecke der Vernetzung der besagten Katodenmischung bestrahlt wird.

**37.** Ein Verfahren gemäß Anspruch 34, bei dem zuerst die besagte Elektrolytmischung zum Zwecke der Vernetzung der besagten Elektrolytmischung bestrahlt und danach die besagte Katodenmischung zum Zwecke der Vernetzung der besagten Katodenmischung bestrahlt wird, bevor das besagte, mit besagter vernetzter Elektrolytmischung beschichtete Anodenmetallfolienteil auf das besagte, mit besagter vernetzter Katodenmischung beschichtete Metallfolienteil aufgepreßt wird.

**38.** Ein Verfahren gemäß Anspruch 34, bei dem das besagte beschichtete Metallfolienteil mit dem besagten Anodenteil zusammengepreßt wird, bevor die besagte Elektrolytmischung und die besagte Katodenmischung zum Zwecke der Vernetzung der besagten Mischungen bestrahlt werden.

## Revendications

**1.** Procédé pour former un réseau polymère interpénétrant contenant un électrolyte liquide pour l'utilisation dans des piles électrochimiques à l'état solide, ce procédé étant caractérisé en ce qu'il comprend les étapes de formation d'un mélange d'un composé liquide monomère polymérisable par radiation ou d'un composé liquide prépolymère polymérisable par radiation qui est terminé aux deux extrémités par une fraction insaturée éthylénique ou une fraction glycidyle, d'un liquide aprotique polaire ioniquement conducteur inerte à une radiation, et d'un sel d'ammonium ou de métal alcalin ionisable, et de soumission dudit mélange à une radiation actinique pour réticuler ainsi ledit matériau polymérisable par radiation et former ainsi une matrice solide contenant ledit liquide ioniquement conducteur.

**2.** Procédé selon la revendication 1, caractérisé en outre en ce que ledit composé polymérisable par radiation est un composé insaturé polyéthylénique incluant au moins un hétéroatome dans la molécule.

**3.** Procédé selon la revendication 2, caractérisé en outre en ce que ledit composé polymérisable par radiation inclut une unité se répétant choisie parmi

$$-(CH_2\underset{\displaystyle R^1}{\underset{|}{CH}}-O)-,\quad -(CH_2CH_2\underset{\displaystyle R^1}{\underset{|}{N}})-,\quad \text{or}\quad -(CH_2\underset{\displaystyle R^1}{\underset{|}{N}}CH_2)-$$

où $R^1$ est de l'hydrogène ou un groupe alkyle inférieur.

**4.** Procédé selon la revendication 3, caractérisé en outre en ce que ledit composé polymérisable par une radiation est représenté par l'une des formules I à III ci-dessous :

$$A\ -(CH_2-\underset{\displaystyle R}{\underset{|}{CH}}-O)_n A \qquad (I)$$

$$A\ -(CH_2-CH_2-\underset{\displaystyle R}{\underset{|}{N}})_n A \qquad (II)$$

$$A\ -(CH_2-\underset{\displaystyle R}{\underset{|}{N}}-CH_2)_n A \qquad (III)$$

où n est environ 3 à 50 et R est de l'hydrogène ou un groupe alkyle en C1 à C3, et A représente une fraction insaturée éthylénique ou une fraction glycidyle.

**5.** Procédé selon la revendication 2, caractérisé en outre en ce que ledit composé polymérisable par radiation est un polyéthylèneglycol modifié pour inclure des groupes terminaux insaturés éthyléniques.

**6.** Procédé selon la revendication 5, caractérisé en outre en ce que ledit composé polymérisable par radiation est le diacrylate de polyéthylèneglycol, le diméthacrylate de polyéthylèneglycol, ou l'éther diglycidylique de polyéthylèneglycol.

7. Procédé selon la revendication 5 ou 6, caractérisé en outre en ce que ledit liquide ioniquement conducteur est l'éther diméthylique de polyéthylèneglycol.

8. Procédé selon l'une quelconque des revendications précédentes, dans lequel ledit sel est un sel d'un cation choisi parmi les cations lithium, sodium, potassium et ammonium ; et d'un anion choisi parmi I-, Br-, SCN-, $ClO_4$-, $CF_3SO_3$-, $BF_4$-, $PF_6$-, $CF_3CCl_3$-, $AsF_6$- et $CF_3COO$-.

9. Procédé selon l'une quelconque des revendications précédentes, caractérisé en outre en ce que ladite radiation actinique est une radiation ultraviolette ou une radiation constituée d'un faisceau d'électrons.

10. Procédé selon l'une quelconque des revendications précédentes, caractérisé en outre en ce que ledit liquide inerte à une radiation est présent dans ledit mélange en une quantité d'au moins 45% en poids, et de préférence d'au moins 70% en poids.

11. Pile électrochimique à l'état solide incluant un réseau polymère interpénétré formé par le procédé selon l'une quelconque des revendications précédentes sous forme d'électrolyte.

12. Procédé pour former un demi-élément d'anode, caractérisé en ce qu'il comprend les étapes de revêtement d'un feuil de métal anodique avec un mélange qui inclut un composé liquide monomère polymérisable par radiation ou un composé liquide prépolymère polymérisable par radiation qui est terminé aux deux extrémités par une fraction insaturée éthylénique ou une fraction glycidyle, un liquide aprotique polaire ioniquement conducteur inerte à une radiation, et un sel d'ammonium ou de métal alcalin ionisable ; et formation à partir de celui-ci d'un réseau polymère interpénétrant selon le procédé de la revendication 1.

13. Procédé selon la revendication 12, caractérisé en outre en ce que ledit matériau polymérisable par radiation est ioniquement conducteur.

14. Procédé selon la revendication 13, dans lequel ledit composé polymérisable par radiation est un composé tel que défini dans l'une quelconque des revendications 3 à 6.

15. Procédé selon l'une quelconque des revendications 12 à 14, caractérisé en outre en ce que ledit feuil de métal anodique est un feuil de lithium ou un feuil revêtu de lithium.

16. Procédé selon l'une quelconque des revendications 12 à 15, caractérisé en outre en ce que ledit mélange contient au moins 45% en poids dudit liquide inerte à une radiation.

17. Procédé pour former une pile électrochimique, caractérisé en ce qu'il comprend les étapes de : assemblage d'un demi-élément d'anode et d'un demi-élément de cathode, et formation entre eux d'un réseau polymère interpénétrant par le procédé selon l'une quelconque des revendications 1 à 10.

18. Procédé de formation d'un demi-élément de cathode, caractérisé en ce qu'il comprend les étapes de : revêtement d'un feuil de métal avec un mélange incluant un matériau de cathode actif, un conducteur électronique, un composé liquide monomère polymérisable par radiation ou un composé liquide prépolymère polymérisable par radiation qui est terminé aux deux extrémités par une fraction insaturée éthylénique ou une fraction glycidyle, et un liquide aprotique polaire ioniquement conducteur inerte à une radiation, et un sel d'ammonium ou de métal alcalin ionisable ; et soumission dudit mélange à une radiation pour réticuler ainsi ledit composé polymérisable par radiation.

19. Procédé selon la revendication 18, caractérisé en outre en ce que ledit matériau de cathode actif est un composé d'intercalation, et de préférence un oxyde de vanadium.

20. Procédé selon l'une quelconque des revendications 18 ou 19, caractérisé en outre en que ledit mélange inclut en plus un sel de métal alcalin ionisable.

21. Procédé selon l'une quelconque des revendications 18 à 20, caractérisé en outre en ce que ledit composé polymérisable par radiation est un composé tel que défini dans l'une quelconque des revendications 2 à 6.

22. Procédé pour former une pile électrochimique, caractérisé en ce qu'il comprend les étapes de revêtement d'un élément de feuil de métal anodique avec une composition d'électrolyte polymérisable par radiation incluant un composé liquide insaturé polyéthylénique monomère ou prépolymère polymérisable par radiation, un liquide aprotique polaire ioniquement conducteur inerte à une radiation, et un sel de métal alcalin ionisable ; de revêtement de ladite composition d'électrolyte polymérisable par radiation avec une composition de cathode polymérisable par radiation incluant un composé liquide insaturé polyéthylénique monomère ou prépolymère polymérisable par radiation, un matériau de cathode actif, un conducteur électronique, et un liquide aprotique polaire ioniquement conducteur inerte à une radiation ; et de soumission de ladite composition d'électrolyte ainsi que de ladite composition de cathode à une radiation, et de laminage d'un collecteur de courant en feuil de métal sur la surface de ladite composition de cathode.

23. Procédé selon la revendication 22, dans lequel ledit conducteur de courant en feuil de métal est appliqué avant ladite étape de radiation.

24. Procédé selon la revendication 22, dans lequel ladite étape de radiation est effectuée avant l'application dudit conducteur de courant en feuil de métal.

25. Procédé pour former une pile électrochimique, caractérisé en ce qu'il comprend les étapes de : revêtement d'un élément de feuil de métal avec une composition de cathode polymérisable par radiation incluant un composé liquide insaturé polyéthylénique monomère ou prépolymère polymérisable par radiation contenant au moins un hétéroatome, un liquide aprotique polaire ioniquement conducteur inerte à une radiation, un matériau de cathode actif et un conducteur électronique ; et de revêtement de ladite composition de cathode polymérisable par radiation avec une composition d'électrolyte polymérisable par radiation incluant un composé liquide insaturé polyéthylénique monomère ou prépolymère polymérisable par radiation, un liquide aprotique polaire ioniquement conducteur inerte à une radiation, et un sel de métal alcalin ionisable ; et de soumission de ladite composition de cathode ainsi que de ladite composition d'électrolyte à une radiation, et de laminage d'un élément de feuil de métal anodique sur la surface de ladite composition d'électrolyte.

26. Procédé selon la revendication 25, dans lequel ledit élément de feuil de métal anodique est laminé sur ladite composition d'électrolyte avant ladite étape de radiation.

27. Procédé selon la revendication 25, dans lequel ladite étape de radiation est effectuée avant ledit laminage d'un élément de feuil de métal anodique.

28. Procédé pour former une pile électrochimique, caractérisé en ce qu'il comprend les étapes de : formation d'un demi-élément d'anode selon le procédé des revendications 12 à 16 dans lequel le composé polymérisable par radiation est insaturé polyéthylénique ; et de revêtement de ladite composition d'électrolyte durcie avec une composition de cathode polymérisable par radiation incluant un composé liquide insaturé polyéthylénique monomère ou prépolymère polymérisable par radiation, un matériau de cathode actif, un conducteur électronique, un liquide aprotique polaire ioniquement conducteur inerte à une radiation.

29. Procédé selon la revendication 28, caractérisé en outre en ce qu'il comprend les étapes supplémentaires de laminage d'un collecteur de courant en feuil de métal sur la surface de ladite composition de cathode, et de soumission de ladite composition de cathode à une radiation pour durcir ladite composition de cathode.

30. Procédé selon la revendication 29, caractérisé en outre en ce qu'il comprend les étapes supplémentaires de soumission de ladite composition de cathode à une radiation pour durcir ladite composition de cathode, et de laminage d'un collecteur de courant en feuil de métal sur la surface de ladite composition de cathode durcie.

31. Procédé pour former une pile électrochimique, caractérisé en ce qu'il comprend les étapes de : formation d'un demi-élément de cathode selon le procédé de l'une quelconque des revendications 18 à 21 dans lequel le composé polymérisable par radiation est insaturé polyéthylénique ; et de revêtement de ladite composition de cathode durcie avec une composition d'électrolyte polymérisable par radiation incluant un composé liquide insaturé polyéthylénique monomère ou prépolymère polymérisable par radiation, un liquide aprotique polaire ioniquement conducteur inerte à une radiation, et un sel de métal alcalin ionisable.

**32.** Procédé selon la revendication 31, caractérisé en outre en ce qu'il comprend les étapes supplémentaires d'application d'un élément de feuil de métal anodique sur la surface de ladite composition d'électrolyte, et de soumission de ladite composition d'électrolyte à une radiation pour durcir ladite composition d'électrolyte.

**33.** Procédé selon la revendication 31, caractérisé en outre en ce qu'il comprend les étapes supplémentaires de soumission de ladite composition d'électrolyte à une radiation pour durcir ladite composition d'électrolyte, et de laminage d'un élément de feuil anodique sur la surface de ladite composition d'électrolyte durcie.

**34.** Procédé pour former une pile électrochimique, caractérisé en ce qu'il comprend les étapes de revêtement d'un élément de feuil de métal anodique avec une composition d'électrolyte polymérisable par radiation incluant un composé liquide insaturé polyéthylénique monomère ou prépolymère polymérisable par radiation, un liquide aprotique polaire ioniquement conducteur inerte à une radiation, et un sel d'ammonium ou de métal alcalin ionisable ; revêtement d'un élément de feuil de métal avec une composition de cathode polymérisable par radiation incluant un composé liquide insaturé polyéthylénique monomère ou prépolymère polymérisable par radiation, un liquide aprotique polaire ioniquement conducteur inerte à une radiation, un matériau de cathode actif et un conducteur électronique ; et de laminage dudit élément de feuil de métal revêtu avec ledit élément anodique revêtu de sorte que ladite composition d'électrolyte soit en contact avec ladite composition de cathode, et de soumission de ladite composition d'électrolyte et de ladite composition cathodique à une radiation pour durcir lesdites compositions.

**35.** Procédé selon la revendication 34, dans lequel ladite composition de cathode est soumise à une radiation pour durcir ladite composition avant de laminer ledit élément de feuil de métal anodique revêtu avec ladite composition de cathode, et dans lequel ladite composition d'électrolyte est ensuite soumise à une radiation pour durcir ladite composition d'électrolyte.

**36.** Procédé selon la revendication 34, dans lequel ladite composition d'électrolyte est soumise à une radiation pour durcir ladite composition d'électrolyte avant de laminer ledit élément de feuil de métal revêtu avec ladite composition d'électrolyte durcie, et dans lequel ladite composition de cathode est ensuite soumise à une radiation pour durcir ladite composition de cathode.

**37.** Procédé selon la revendication 34, dans lequel ladite composition d'électrolyte est d'abord soumise à une radiation pour durcir ladite composition d'électrolyte, puis ladite composition de cathode est soumise à une radiation pour durcir ladite composition de cathode, avant de laminer ledit élément de feuil de métal anodique avec ladite composition d'électrolyte durcie sur ledit élément de feuil de métal revêtu avec la composition de cathode durcie.

**38.** Procédé selon la revendication 34, dans lequel ledit élément de feuil de métal revêtu est laminé avec ledit élément anodique avant de soumettre ladite composition d'électrolyte et ladite composition cathodique à une radiation pour durcir les dites compositions.